# EUROPEAN PATENT APPLICATION

(11) **EP 1 850 292 A2**
(43) Date of publication of application: **31.10.2007**
(21) Application number: 07107114.6
(22) Date of filing: 27.04.2007
(51) Int. Cl.: G06T 7/00

(54) **Monochrome frame detection method**

(30) Priority: 27.04.2006 JP 2006123811
(71) Applicant: Kabushiki Kaisha Toshiba, Tokyo 105-8001 (JP)
(72) Inventor: Horiguchi, Takeo, c/o Toshiba Corp., IP Division, Tokyo (JP)
(74) Representative: Henkel, Feiler & Hänzel

(57) **Abstract**

According to one embodiment, a monochrome frame detection method includes a first process and second process. The first process includes: (1) reading a video frame; (2) extracting pixel data for each from pixels included in the video frame; (3) calculating an average value of the pixel data; (4) calculating compared values by comparing each of the pixel data and the average value; and (5) determining whether or not the video frame is the monochrome frame based on the compared values. If the video frame is determined to be the monochrome frame the average value is stored as a reference value. In the second process, the calculation of the average value of the (3) is skipped, and the compared values are calculated by comparing each of the pixel data and the stored reference value.

## Description

### CROSS-REFERENCE TO RELATED APPLICATIONS

This application is based upon and claims the benefit of priority from Japanese Patent Application No. 2006-123811, filed April 27, 2006, the entire contents of which are incorporated herein by reference.

### BACKGROUND

### 1. Field

One embodiment of the invention relates to a monochrome frame detection method for analyzing a video file. In particular, one embodiment of the invention relates to a monochrome frame detection method for efficiently detecting monochrome frames that are included in a video file of a program containing television commercials.

### 2. Description of the Related Art

In general, in a program that contains television commercials of TV broadcast etc., monochrome frames called black frames are inserted regularly in a television commercial interval. Accordingly a television commercial interval can be detected by using such black frames.

JP-T-2002-521977 (The symbol "JP-T" as used herein means a Japanese translation of a published PCT patent application) discloses a television commercial detection apparatus having a black frame detecting means.

In this television commercial detection apparatus, a black frame (monochrome frame) is detected by dividing each frame into plural regions, calculating average maximum brightness and average minimum brightness for the regions, and comparing the difference between them with a threshold value.

However, in the conventional television commercial detection apparatus, average values need to be calculated for each frame, which results in the higher calculation cost and a heavier load imposed on the apparatus.

### SUMMARY

According to one embodiment of the invention, a monochrome frame detection method that is low in calculation cost is provided.

(1) There is provided that a monochrome frame detection method comprising a calculating step of reading, in stream order, a frame included in a video file, extracting plural sample pixels from the frame, and calculating brightness and hue average values of the plural sample pixels; a comparing step of calculating comparison values by comparing brightness and hue values of all of the plural sample pixels with the brightness and hue average values; a first judging step of judging whether the frame is a monochrome frame on the basis of the comparison values; a storing step of storing the brightness and hue average values as default values if the frame is a monochrome frame; and a second judging step of judging whether each of subsequent frames in a stream is a monochrome frame by applying the default values to the comparing step as average values.

According to this method, since brightness and he average values of a monochrome frame are stored as default values, the average calculation is omitted in that portion of a stream which follows the frame with which the default values were obtained. The calculation cost can thus be reduced.

(2) There is also provided that a monochrome frame detection method comprising a generating step of generating a monochrome frame information file in a storage section for storing a video file; a reading step of reading, in stream order, a frame included in the video file; a calculating step of dividing the frame into plural regions, extracting sample pixels from the plural respective regions, and calculating brightness and hue average values of the plural sample pixels; a judging step of judging that the frame is a monochrome frame if differences between brightness and hue values of all of the plural sample pixels and the brightness and hue average values are smaller than second threshold values; a storing step of storing the brightness and hue average values in the monochrome frame information file and increments a counter by one if the frame is a monochrome frame; and a determining step of employing the brightness and hue average values as default average values for the video file if a count of the counter is larger than a first threshold value.

In addition to the advantage of item (1), an advantage that the accuracy of the monochrome frame detection is increased by setting the first threshold value and the second threshold values.

Therefore, according to one embodiment of the invention, the calculation cost of the monochrome frame detection is reduced.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is an exemplary schematic diagram of an image processing apparatus according to an embodiment of the present invention;

Fig. 2 is an exemplary schematic diagram showing the configuration of the image processing apparatus according to the embodiment of the invention;

Fig. 3 is an exemplary schematic diagram showing the structure of a video file according to the embodiment of the invention;

Fig. 4 is an exemplary schematic diagram showing the structure of a frame according to the embodiment of the invention; and

Fig. 5 is a flowchart showing an exemplary monochrome frame detecting method according to the embodiment of the invention.

### DETAILED DESCRIPTION

Various embodiments according to the invention will be described hereinafter with reference to the accompanying drawings. In general, according to one embodiment of the invention, a monochrome frame detection method includes (a) a first process and (b) a second process. (a) The first process includes (a-1) reading a first video frame included in the video stream, (a-2) extracting first pixel data for each of first sample pixels selected from first pixels included in the first video frame, (a-3) calculating an average value of the first pixel data, (a-4) calculating first compared values for each of the first sample pixels by comparing each of the first pixel data and the average value, (a-5) determining whether or not the first video frame is the monochrome frame based on the first compared values, and (a-6) storing the average value as a reference value when the first video frame is determined to be the monochrome frame. (b) The second process includes (b-1) reading a second video frame included in the video stream, (b-2) extracting second pixel data for each of second sample pixels selected from second pixels included in the second video frame, (b-3) calculating second compared values for each of the second sample pixels by comparing each of the second pixel data and the reference value, and (b-4) determining whether or not the second video frame is the monochrome frame based on the second compared values.

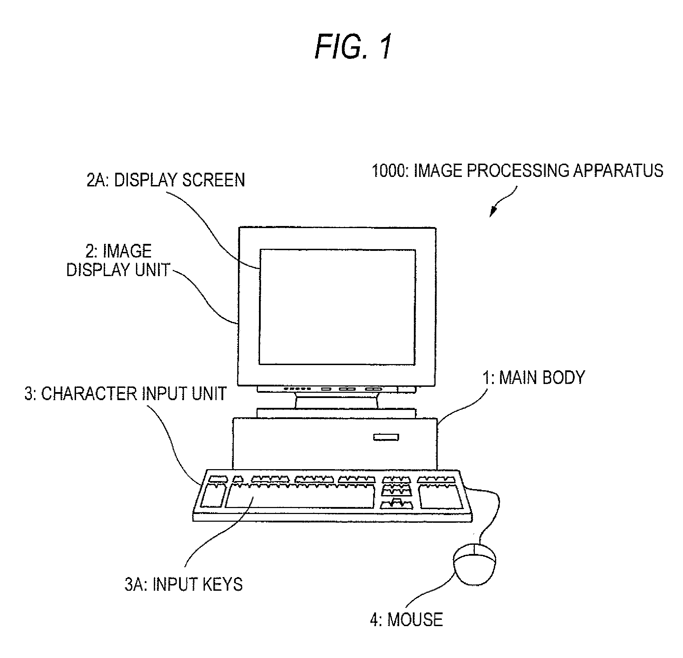

Fig. 1 is a schematic diagram of an image processing apparatus according to the embodiment of the invention.

The image processing apparatus 1000 has a main body 1 which incorporates such electronic components as a CPU (central processing unit) and an HDD (hard disk drive), an image display unit 2 having a display screen 2A on which a text, an image, etc. are displayed, a character input unit 3 having input keys 3A such as character keys and function keys, and a mouse 4 as a pointing device.

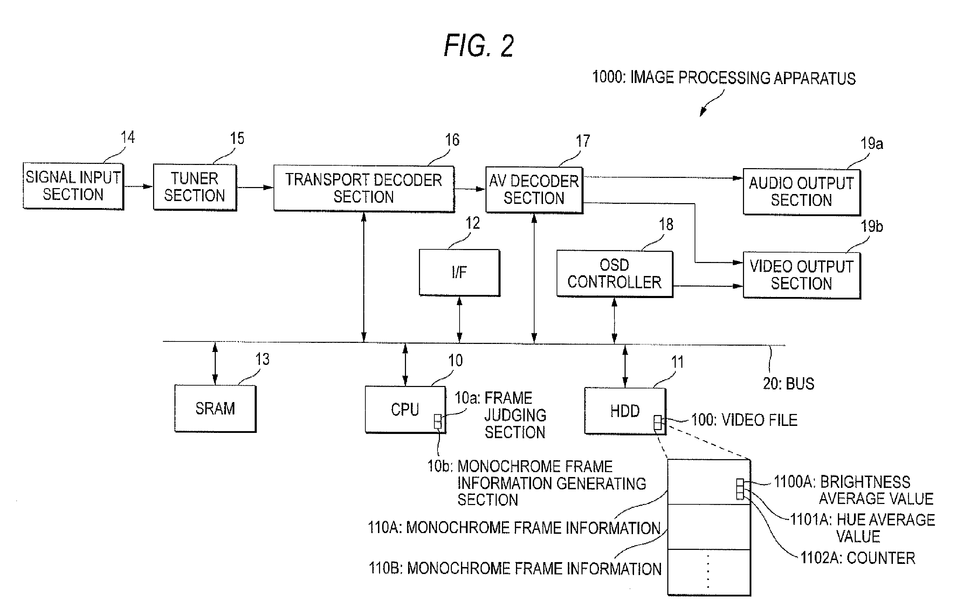

Fig. 2 is a schematic diagram showing the configuration of the image processing apparatus according to the embodiment of the invention.

The image processing apparatus 1000 has the CPU 10 for controlling individual sections, the HDD 11 for storing programs and data, an interface (I/F) 12 which is connected to the character input unit 3 and the mouse 4 and serves to send, to each section, a signal produced by manipulating them, and an SRAM (static random access memory) 13 for temporarily storing data while each section is in operation. The individual sections of the image processing apparatus 1000 are connected to each other via a bus 20.

The image processing apparatus 1000 also has a signal input section 14 for receiving a digital broadcast signal from an external video distribution source, for example, a tuner section 15 for demodulating a reception signal, a transport decoder section 16 for sending, to an AV decoder section 17, on a packet-by-packet basis, a communication signal received from the tuner section 15, the AV decoder section 17 for converting the reception signal into audio and video signals, an OSD controller 18 which serves for display of text information relating to video setting, an audio output section 19a for sending an audio output to the outside, and a video output section 19b for combining a video output and OSD information and outputting a resulting signal to the image display unit 2.

The CPU 10 has a function of receiving video information from the AV decoder section 17 and storing it in the HDD 11 as a video file 100. The video file 100 (video stream) consists of audio data, video data, and metadata including detailed information of the video file 100 and icon display information.

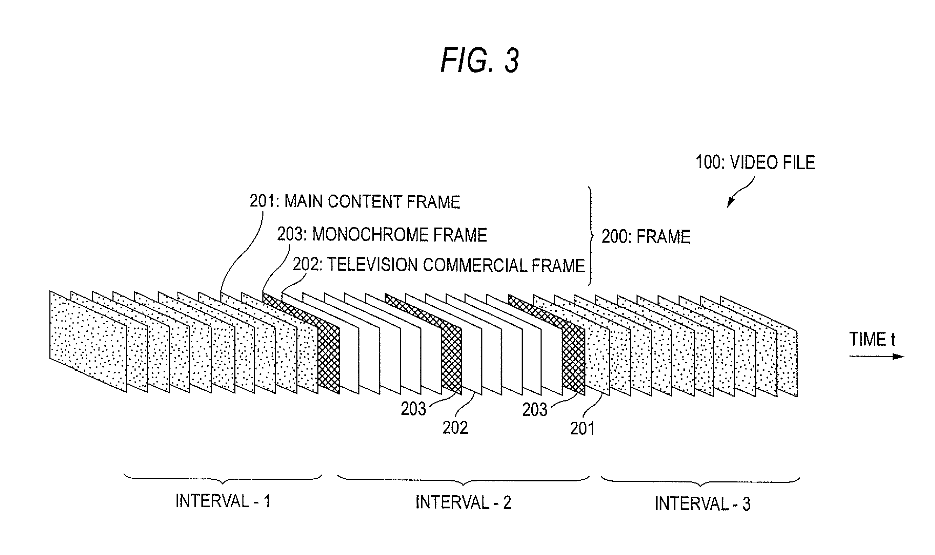

Fig. 3 is a schematic diagram showing the structure of a video file according to the embodiment of the invention.

A video file 100 (video stream), in which frames are arranged in time series in the direction of time t shown in Fig. 3, consists of main content frames 201 containing main contents, television commercial frames 202 containing television commercial contents, and monochrome frames 203 which are inserted between television commercial frames 202 and generally expressed in monochrome. The term "frame 200" is a generic term covering "main content frame 201," "television commercial frame 202," and "monochrome frame 203."

In each of interval-1 and interval-3, the video file 100 consists of only main content frames 201 and includes main contents of a program. In interval-2, the video file 100 consists of television commercial frames 202 and monochrome frames 203 and includes television commercial contents.

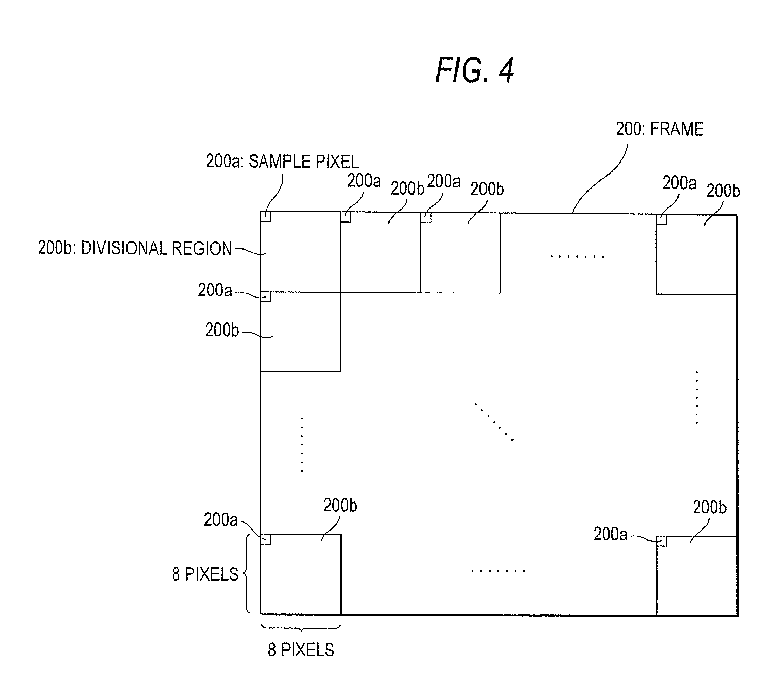

Fig. 4 is a schematic diagram showing the structure of a frame (video frame) according to the embodiment.

Each frame 200, whose frame size is based on a video file 100, is analyzed after being divided into divisional regions 200b of 8 x 8 pixels. For a frame analysis, a sample pixel 200a (1 x 1 pixel) is extracted from the top-left corner of each divisional region 200b.

The operation of the image processing apparatus 1000 according to the embodiment of the invention will be described below with reference to Figs. 1-5.

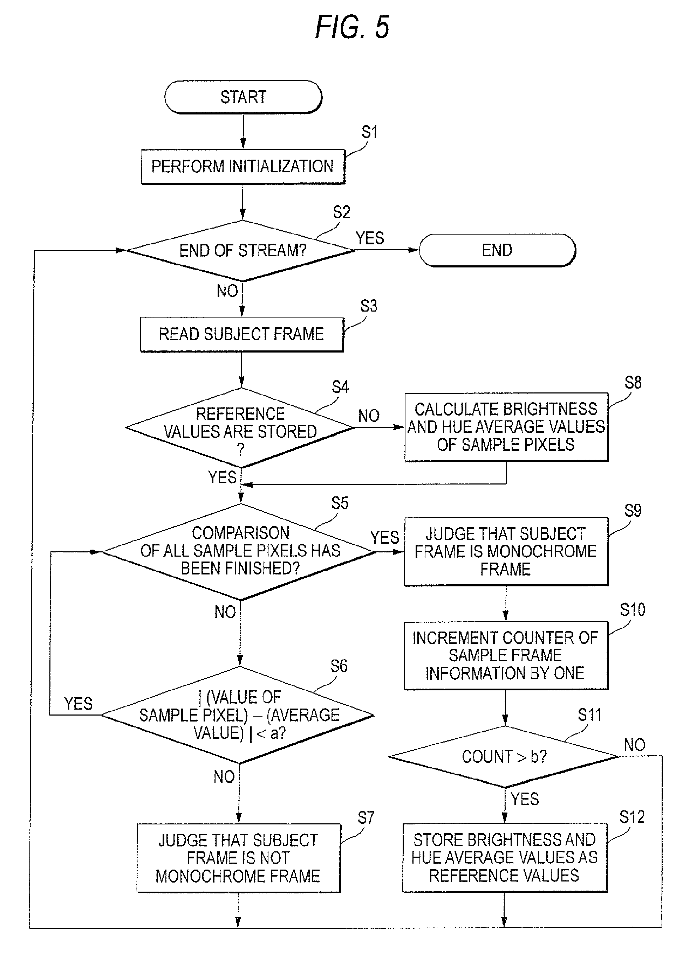

Fig. 5 is a flowchart showing a monochrome frame detection method according to the embodiment of the invention.

First, before a frame judging section 10a of the CPU 10 starts analyzing a video file 100 (video stream), at block S1 a monochrome frame information generating section 10b of the CPU 10 generates a monochrome frame information file 110A containing no actual information stored in the HDD 11 and a monochrome frame detection process is initialized. One monochrome frame information file 110A is generated for each video file 100.

Then, the frames 200 of the video file 100 are processed in turn from the head frame to the last frame. The following detection process is executed on each frame that is not the last frame (S2 : no).

At block S3, the frame judging section 10a reads brightness values and hue values (pixel data) of plural sample pixels 200a of the frame 200 being processed.

At block S4, the frame judging section 10a judges whether or not brightness and hue average values of all sample pixels 200a of the frame 200 are already contained in the monochrome frame information file 110A. If such values are not contained in the monochrome frame information file 110A (S4: no), at block S8 the frame judging section 10a reads data of all the sample pixels 200a and performs calculation and the monochrome frame information generating section 10b stores a brightness average value 1100A and a hue average value 1101A (calculation results) in the monochrome frame information file 110A as reference values.

At block S6, the frame judging section 10a compares the brightness value and the hue value (pixel data) of each sample pixel 200a with the average values (S5: no), and judges whether or not the absolute values of differences from the brightness average value 1100A and the hue average value 1101A are smaller than certain threshold values a (second threshold values). If the absolute value of at least one of the differences of a certain sample pixel 200a is larger than or equal to the corresponding threshold value a (S6: no), at block S7 the frame judging section 10a judges that a brightness or hue (pixel data) variation exists in the frame 200 and hence the frame 200 is not a monochrome frame.

If the absolute values of the differences of all the sample pixels 200a are smaller than the threshold values (S6: yes; S5: yes), the frame judging section 10a judges at block S9 that the subject frame 200 is a monochrome frame and increments a counter 1102A of the monochrome frame information file 110A by one at block S10.

If the count of the counter 1102A is larger than a threshold value b (first threshold value) (S11: yes), at block S12 the frame judging section 10a judges that the brightness average value 1100A and the hue average value 1101A are average values that characterize the monochrome frames 203 of the video file 100 and stores them as reference values. If the count of the counter 1102A is smaller than or equal to the threshold value b (S11: no), the frame judging section 10a returns to block S2 to acquire another piece of monochrome frame information. If the process has been executed for all frames 200 S2: yes), the process is finished.

According to the above embodiment, since a brightness average value 1100A and a hue average value 1101A can be called and used as reference average values, it is no longer necessary to calculate average values for each frame once reference average values are determined. As a result, the calculation cost can be reduced, which leads to reduction in the load of the CPU 10 and hence decrease in processing time. The performance of the image processing apparatus 1000 is improved accordingly.

Since the threshold value b is used, reference average values are set only when plural sets of average values that are close to each other have been detected. As a result, average values of monochrome frames can be acquired with high accuracy without being influenced by a monochrome frame that happens to occur. The monochrome frame judgment can thus be performed with high accuracy.

The sample pixel 200a of each divisional region 200b is not limited to the top-left pixel and may be any pixel.

The frames 200 may be either frames of the original image of a video file 100 or frames of a reduced version of the original image of the video file 100 (video stream).

The threshold values a and b may be set as desired by a designer by taking monochrome frame detection accuracy into consideration.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A monochrome frame detection method for determining whether or not a video frame read from a video stream that includes a plurality of video frames is a monochrome frame, the method comprising:
(a) a first process comprising:
(a-1) reading a first video frame included in the video stream;
(a-2) extracting first pixel data for each of first sample pixels selected from first pixels included in the first video frame;
(a-3) calculating an average value of the first pixel data;
(a-4) calculating first compared values for each of the first sample pixels by comparing each of the first pixel data and the average value;
(a-5) determining whether or not the first video frame is the monochrome frame based on the first compared values; and
(a-6) storing the average value as a reference value when the first video frame is determined to be the monochrome frame; and
(b) a second process comprising:
(b-1) reading a second video frame included in the video stream;
(b-2) extracting second pixel data for each of second sample pixels selected from second pixels included in the second video frame;
(b-3) calculating second compared values for each of the second sample pixels by comparing each of the second pixel data and the reference value; and
(b-4) determining whether or not the second video frame is the monochrome frame based on the second compared values.

2. The method according to claim 1, wherein:
the first pixel data comprises first brightness values and first hue values;
the second pixel data comprises second brightness values and second hue values;
the average value comprises an average brightness value and an average hue value;
the reference value comprises a reference brightness value and a reference hue value;
the first compared values comprises first compared brightness values and first compared hue values; and
the second compared values comprises second compared brightness values and second compared hue values.

3. The method according to claim 2, wherein:
each of the first brightness values and the first hue values are extracted for each of the first sample pixels;
each of the second brightness values and the second hue values are extracted for each of the second sample pixels;
each of the average brightness value and the average hue value are calculated for each of the first brightness values and the first hue values;
each of the first compared brightness values and the first compared hue values are calculated by comparing each of the first brightness values and the average brightness value, and each of the first hue values and the average hue value, respectively; and
each of the second compared brightness values and the second compared hue values are calculated by comparing each of the second brightness values and the reference brightness value, and each of the second hue values and the reference hue value, respectively.

4. The method according to claim 1, wherein
the first process is performed for each of a plurality of video frames included in the video stream;
the average value is stored as the reference value only when the average values calculated in each of the first processes are determined to have a same value for a predetermined number of times; and
the second process is performed after the average value is stored as the reference value.

5. A monochrome frame detection method for determining whether or not a video frame read from a video stream that includes a plurality of video frames is a monochrome frame, the method comprising:
(a) an initialization process that is adapted in advance of a detection of the monochrome frame, the initialization process comprising:
(a-1) generating a monochrome frame information file in a storage section that stores the video stream; and
(b) a first detection process that is initially adapted to the video stream, the first detection process comprising:
(b-1) reading a first video frame included in the video stream;
(b-2) extracting first pixel data for each of first sample pixels selected from first pixels included in the first video frame;
(b-3) calculating an average value of the first pixel data;
(b-4) calculating first compared values for each of the sample pixels by comparing each of the first pixel data and the average value;
(b-5) determining the first video frame is the monochrome frame if each of the first compared values is less than a first threshold value;
(b-6) incrementing a counter if the first video frame is determined as the monochrome frame; and
(b-7) storing the average value in the monochrome frame information file as a reference value if the first video frame is determined as the monochrome frame.

6. The method according to claim 5, further comprising:
(c) a second process that is adapted to the video stream if the reference value is stored in the monochrome frame information file, the second process comprising:
(c-1) reading a second video frame included in the video stream;
(c-2) extracting second pixel data for each of second sample pixels selected from second pixels included in the second video frame;
(c-3) calculating second compared values for each of the second sample pixels by comparing each of the pixel data and the reference value; and
(c-4) determining the second video frame is the monochrome frame if each of the second compared values is less than the first threshold value.

7. The method according to claim 6, wherein:
the first pixel data comprises first brightness values and first hue values;
the second pixel data comprises second brightness values and second hue values;
the average value comprises an average brightness value and an average hue value;
the reference value comprises a reference brightness value and a reference hue value;
the first compared values comprises first compared brightness values and first compared hue values; and
the second compared values comprises second compared brightness values and second compared hue values.

8. The method according to claim 7, wherein:
each of the first brightness values and the first hue values are extracted for each of the first sample pixels;
each of the second brightness values and the second hue values are extracted for each of the second sample pixels;
each of the average brightness value and the average hue value are calculated for each of the first brightness values and the first hue values;
each of the first compared brightness values and the first compared hue values are calculated by comparing each of the first brightness values and the average brightness value, and each of the first hue values and the average hue value, respectively; and
each of the second compared brightness values and the second compared hue values are calculated by comparing each of the second brightness values and the reference brightness value, and each of the second hue values and the reference hue value, respectively.
